# EUROPÄISCHE PATENTSCHRIFT

(11) **EP 2 365 641 B1**
(45) Veröffentlichungstag und Bekanntmachung des Hinweises auf die Patenterteilung: **17.06.2015**
(21) Anmeldenummer: 11000231.8
(22) Anmeldetag: 13.01.2011
(51) Int. Cl.: H04B 1/00

(54) **Kommunikationssystem mit einem statischen Separation-Kernel-Betriebssystem und zugehöriges Betriebsverfahren**
Communication system with a static separation-kernel operating system and accompanying operating method
Système de communication doté d'un système de fonctionnement à noyau de séparation statique et procédé de fonctionnement associé

(30) Priorität: 23.02.2010 DE 102010008941; 30.06.2010 DE 102010025652
(43) Veröffentlichungstag der Anmeldung: 14.09.2011
(73) Patentinhaber: Rohde & Schwarz GmbH & Co. KG, 81671 München (DE)
(72) Erfinder: Kostov, Ivan, 80355 München (DE); Stadler, Georg, 84419 Schwindegg (DE); Bleichner, Thomas, 86971 Peiting (DE)
(74) Vertreter: Körfer, Thomas

(56) Entgegenhaltungen:
- WO-A2-03/028228
- JP-A- 61 288 538
- US-A1- 2008 279 128
- US-A1- 2009 023 414

## Beschreibung

Die vorliegende Erfindung bezieht sich auf die Realisierung von Kommunikationssystemen, insbesondere von Funksystemen, die Daten über eine Luftschnittstelle übertragen sollen.

Die vielen derzeit vorhandenen und sich laufend weiterentwickelnden Kommunikationsstandards und Kommunikationsprotokolle lassen sich nur noch schwer ausschließlich in Hardware realisieren. Schon seit längerem werden daher mehr und mehr Komponenten eines Kommunikationssystems, welche früher durch diskrete Bauteile repräsentiert wurden, durch Software-Module ersetzt. Eine vollständig digitale Basisbandgenerierung ist ein Schritt, um mit einer möglichst geringen Anzahl an Bauteilen möglichst viele Kommunikationsstandards abzudecken. Immer schneller werdende Digital/Analog-Umsetzer und digitale Signalprozessoren führen dazu, dass auch die Mischung in das Übertragungsband künftig über Software-Module erfolgen kann.

Das SDR-Projekt (engl. software defined radio; dt. softwaredefinierter Funk) beschreibt das Bestreben, möglichst die gesamte Signalverarbeitung eines Hochfrequenz-Senders oder -Empfängers mit Hilfe angepasster Hardware (z.B. digitale Signalprozessoren, programmierbare Logikbausteine) in Software nachzubilden. Das Einsatzgebiet ist sehr breit gestreut und reicht von Mobiltelefonen bis hin zu Funkgeräten. Damit möglichst einheitliche Schnittstellen existieren, wurden diese in der SCA-Architektur (engl. software communication architecture; dt. Software Kommunikationsarchitektur) genormt.

Diese erlaubt verschiedenen Herstellern, das Entwickeln von Kommunikationsprotokollen, die anschließend auf Kommunikationsgeräten sämtlicher Hersteller die den SCA-Standard einhalten, lauffähig sind. Dabei können verschiedene Kommunikationsstandards und Kommunikationsprotokolle in Echtzeit nachgeladen oder ausgetauscht werden. Zu beachten ist allerdings, dass sichergestellt sein muss, dass sich die verschiedenen Kommunikationsprotokolle gegenseitig nicht beeinflussen.

Aus der US 2008/0077993 A1 sind ein System und ein Verfahren bekannt, die es erlauben Anwendungen in eigenen Speicherbereichen auszuführen. Eine Ladeeinheit für eingebettete Speicherbereiche (engl. embedded partition loader) kopiert die Anwendungen in den jeweiligen eigenen Speicherbereich. Sobald die Anwendung durch eine TPM-Einheit (engl. trusted platform module; dt. gesichertes Plattformmodul) verifiziert ist, wird der Ladeeinheit von dieser ein Schlüssel zu Verfügung gestellt, mit welchem die Ladeeinheit weitere Daten, die die Anwendung benötigt, entschlüsselt und in den Speicherbereich der Anwendung kopiert. Bei den Anwendungen in den Speicherbereichen handelt es sich v.a. um Betriebssysteme, wobei die Speicherbereiche einer Anwendung von den anderen Anwendungen isoliert sind.

Nachteilig an der US 2008/0077993 A1 ist, dass die TPM-Einheit einzig das Starten von bekannten Anwendungen erlaubt, weil nur solche verifiziert werden können. Bei den Anwendungen handelt es sich dabei v.a. um Betriebssysteme, wobei eine Auslagerung von einzelnen Kommunikationsprotokollen der Betriebssysteme in separate Speicherbereiche nicht gezeigt ist. Ein dynamischer Austausch dieser Anwendungen ist, während das Gesamtsystem in Betrieb ist, nicht möglich.

Die Veröffentlichung US 2009/023414 A beschreibt ein Kommunikationssystem zur mobilen Kommunikation mit einer zentralen Verarbeitungseinheit, einer Prozess-und Datenverarbeitungseinheit, einer Ladeeinheit und zumindest einer Speicherpartition, wobei die Prozess- und Datenverarbeitungseinheit mit der zentralen Verarbeitungseinheit, mit der Ladeeinheit und mit der zumindest einen Speicherpartition verbunden ist und wobei die Ladeeinheit mit der zumindest einen Speicherpartition verbunden ist, wobei ein Kommunikationsprotokoll in der zumindest einen Speicherpartition durch die Ladeeinheit einen Upgrade unterworfen werden kann.

Es ist daher die Aufgabe der Erfindung ein Kommunikationssystem und ein Verfahren für ein Kommunikationssystem zu schaffen, die es erlauben, verschiedene bekannte und/oder zukünftig erwartete Kommunikationsprotokolle innerhalb des Kommunikationssystems zu verwenden.

Die Aufgabe wird bezüglich des Kommunikationssystems durch die Merkmale des Anspruch 1 und bezüglich des Verfahrens durch die Merkmale des Anspruchs 9 gelöst. In den Unteransprüchen sind vorteilhafte Weiterbildungen des erfindungsgemäßen Kommunikationssystems und des erfindungsgemäßen Verfahrens für das Kommunikationssystem angegeben.

Das erfindungsgemäße Kommunikationssystem zur mobilen Kommunikation weist eine zentrale Verarbeitungseinheit, ein, eine Prozess- und Datenverarbeitungseinheit, eine Ladeeinheit und zumindest eine Speicherpartition auf. Die Prozess- und Datenverarbeitungseinheit ist dabei mit der zentralen Verarbeitungseinheit, mit der Ladeeinheit und mit der zumindest einen Speicherpartition verbunden. Die Ladeeinheit ist weiterhin mit der zumindest einen Speicherpartition verbunden. Weiterhin ist jedes bekannte und/oder zukünftig erwartete Kommunikationsprotokoll in der zumindest einen Speicherpartition während des Betriebs des Kommunikationssystems durch die Ladeeinheit auswechselbar.
Besonders vorteilhaft ist es, wenn sämtliche bekannte und/oder zukünftig erwartete Kommunikationsprotokolle durch die Ladeeinheit innerhalb der zumindest einen Speicherpartition während des Betriebs des Kommunikationssystems ausgetauscht werden können. Dadurch wird eine sehr hohe Dynamik des Gesamtsystems erreicht, wobei gleichzeitig auf das Neustarten des Kommunikationssystems verzichtet werden kann. Bisher müssen auch immer die Speicherpartitionen entfernt und neu erzeugt werden, was nun nicht mehr erforderlich ist, wodurch nochmals Rechenzeit eingespart wird.

Das erfindungsgemäße Verfahren für ein Kommunikationssystem zur mobilen Kommunikation weist eine zentrale Verarbeitungseinheit, eine Prozess- und Datenverarbeitungseinheit, eine Ladeeinheit und zumindest eine Speicherpartition auf, wobei die Kommunikationsprotokolle der zumindest einen Speicherpartition im Betrieb auswechselbar sind. In einem ersten Schritt wird zumindest die zumindest eine Speicherpartition mit leerem Inhalt erzeugt, die größer ist, als jedes bekannte und/oder zukünftig erwartete Kommunikationsprotokoll. Dies erfolgt durch die Prozess- und Datenverarbeitungseinheit. In einem weiteren Verfahrensschritt wird das Kommunikationsprotokoll aus zumindest einer, mit der zentralen Verarbeitungseinheit verbundenen Speichereinheit in die zumindest eine Speicherpartition geladen. Dies erfolgt durch die Ladeeinheit während sich das Kommunikationssystem in Betrieb befindet. Weiterhin wird in einem weiteren Verfahrensschritt das Kommunikationsprotokoll durch die Ladeeinheit innerhalb der zumindest einen Speicherpartition ausgeführt.

Besonders vorteilhaft ist es, wenn die zumindest eine Speicherpartition mit einer Größe erstellt wird, die größer ist, als jedes bekannte und/oder zukünftig erwartete Kommunikationsprotokoll. Dies stellt sicher, dass zur Laufzeit keine weitere Speicherpartition erstellt werden muss, um ein sonst zu großes Kommunikationsprotokoll nachladen zu können. Dies ist vorteilhaft, wenn die Speicherbereiche für das Betriebssystem nicht sichtbar sind, weil es in vielen Systemen nicht möglich ist, zur Laufzeit Speicherbereiche aus dem Bereich des Betriebsystems abzuziehen und von diesem zu isolieren. Weiterhin ist von Vorteil, dass die Kommunikationsprotokolle gewechselt werden können, während das Kommunikationssystem in Betrieb ist und nicht nur beim Start des Kommunikationssystems und dass nach dem Ladevorgang kein Neustart des Kommunikationssystems erforderlich ist. Außerdem müssen im Betrieb keine Speicherpartitionen entfernt und neu erzeugt werden.

Ein weiterer Vorteil des erfindungsgemäßen Kommunikationssystems besteht, wenn es sich bei der Prozess- und Datenverarbeitungseinheit um ein Separations-Kernel handelt, weil dieser die Speicherbereiche besser gegeneinander isoliert, wodurch der Einsatz des Kommunikationssystems in sensiblen Bereichen, wie etwa im Flugverkehr, überhaupt erst ermöglicht wird.

Ein weiterer Vorteil des erfindungsgemäßen Kommunikationssystems besteht, wenn die zumindest eine Speicherpartition von ihrer Größe derart gewählt wird, dass jedes der bekannten und/oder zukünftig erwarteten Kommunikationsprotokolle in diese zumindest eine Speichereinheit ladbar ist. Gerade in sensiblen Bereichen können die Speicherpartitionen nur zum Startzeitpunkt des Kommunikationssystems erstellt werden. Ein Erstellen oder Löschen der Speicherpartitionen ist im Betrieb nicht möglich, so dass für den Fall, wenn ein Kommunikationsprotokoll gegen ein anderes getauscht werden soll, das Kommunikationssystem neu gestartet werden muss, weil z.B. das neue Kommunikationsprotokoll größer ist, als die vorhandene Speicherpartition.

Außerdem besteht bei dem erfindungsgemäßen Kommunikationssystems ein Vorteil, wenn das Kommunikationssystem derart viele weitere Speicherpartitionen aufweist, dass alle die bekannten und/oder zukünftig erwarteten Kommunikationsprotokolle in diese weiteren Speicherpartitionen ladbar sind. Dadurch wird sichergestellt, dass während des Betriebs des Kommunikationssystems zu jedem Zeitpunkt weitere Kommunikationsprotokolle geladen werden können, auch wenn das Kommunikationssystem das Erzeugen von weiteren Speicherpartitionen aus Sicherheitsgründen im Betrieb nicht zulässt.

Ein weiterer Vorteil des erfindungsgemäßen Verfahrens für ein Kommunikationssystem zur mobilen Kommunikation besteht, wenn das Verfahren die zusätzlichen Verfahrensschritte "Stoppen", "Warten" und "Entfernen" aufweist. Der Verfahrensschritt "Stoppen" erlaubt es der Ladeeinheit ein Kommunikationsprotokoll innerhalb einer Speicherpartition zu stoppen. Im daran anschließenden Verfahrensschritt "Warten", wartet die Ladeeinheit bis sich das Kommunikationsprotokoll selbst beendet hat, um anschließend im Verfahrensschritt "Entfernen" das Kommunikationsprotokoll aus der zumindest einen Speicherpartition zu löschen. Der Vorteil dabei ist, dass die Speicherpartition weiterhin vorhanden bleibt und andere Kommunikationsprotokolle anschließend in ihr gespeichert werden können. Außerdem führt das selbstständige Beenden des Kommunikationsprotokolls dazu, dass andere Anwendungen, die dieses Kommunikationsprotokoll nutzen, nicht in undefinierten Zuständen hängen bleiben, weil das Kommunikationsprotokoll sein Verschwinden aus der Speicherpartition ankündigt und die betroffenen Anwendungen darauf adäquat reagieren können.

Weiterhin besteht ein Vorteil des erfindungsgemäßen Verfahrens für ein Kommunikationssystem zur mobilen Kommunikation dann, wenn der nicht von den Kommunikationsprotokollen belegte Speicher in der zumindest einen Speicherpartition mit binären Nullen oder Einsen durch die Ladeeinheit gefüllt wird. Dadurch ist sichergestellt, dass keine Reste von bereits gelöschten Kommunikationsprotokollen aufgrund von falschen Zeigerzuweisungen zur Ausführung gelangen und das Kommunikationssystem dadurch in einen nicht definierten Zustand übergeht.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: eine Übersicht über ein Blockschaltbild eines Ausführungsbeispiels des erfindungsgemäßen Kommunikationssystems;
- Fig. 2: eine Detail-Darstellung eines Ausführungsbeispiels des erfindungsgemäßen Kommunikationssystems, die erläutert, wie die Ladeeinheit und die zumindest eine Speicherpartition zusammen interagieren;
- Fig. 3: eine weitere Detail-Darstellung eines Ausführungsbeispiels des erfindungsgemäßen Kommunikationssystems, die erläutert, wie die Ladeeinheit und die zumindest eine Speicherpartition zusammen interagieren; und
- Fig. 4: ein beispielhaftes Ablaufdiagramm, welches das erfindungsgemäße Verfahren für das Kommunikationssystem beschreibt.

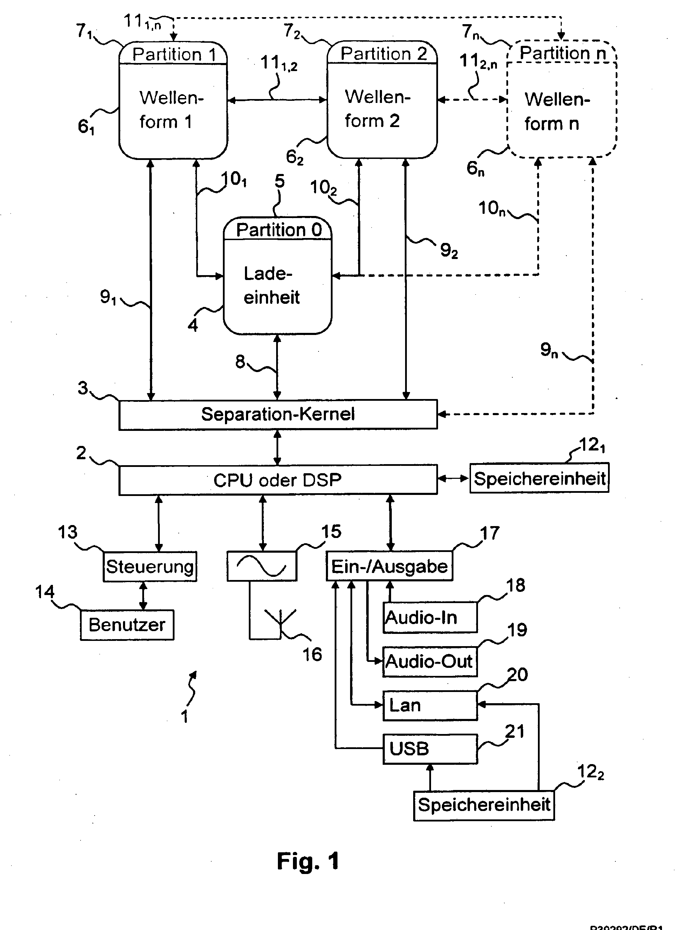

Fig. 1 zeigt eine Übersicht über ein Ausführungsbeispiel des erfindungsgemäßen Kommunikationssystems 1. Bei dem Kommunikationssystem 1 handelt es sich insbesondere um ein Funkgerät. Das Kommunikationssystem 1 zur mobilen Kommunikation weist eine zentrale Verarbeitungseinheit 2 auf. Bei dieser zentralen Verarbeitungseinheit 2 handelt es sich um eine CPU (engl. central processing unit; dt. zentrale Verarbeitungseinheit) oder um einen digitalen Signalprozessor. Weiterhin umfasst das Kommunikationssystem 1 eine Prozess- und Datenverarbeitungseinheit 3. Bei der Prozess- und Datenverarbeitungseinheit 3 handelt es sich um das Betriebssystem des Kommunikationsgeräts 1. Sicherheitskritische Anwendungen erfordern hier einen Separations-Kernel, bzw. ein Separation-Kernel-Betriebssystem 3. Separations-Kernel trennen das Programm des Kommunikationssystems 1 in einzelne Funktionsblöcke, die als eigenständige Prozessräume ausführungstechnisch und zeitlich strikt voneinander getrennt werden. Die verschiedenen Funktionsblöcke werden in verschiedenen Speicherbereichen, bzw. Speicherpartitionen (engl. partitions; dt. Partitionen) gespeichert. Zwischen diesen Speicherpartitionen werden vom Separation-Kernel-Betriebssystem 3 hohe Hürden gesetzt, die nur in strikt kontrollierter Weise mit vordefinierten Kommunikationskanälen überwunden werden können. Die Partition-Anordnung wird für das Kommunikationssystem 1 zur Entwicklungszeit fest definiert und ist aus Sicherheitsgründen zur Boot- bzw. Laufzeit unabänderlich und damit statisch.

In dem erfindungsgemäßen Ausführungsbeispiel aus Fig. 1 sind mehrere Speicherpartitionen 7₁, 7₂ bis 7ₙ vorhanden, in die verschiedene Wellenformen 6₁, 6₂ bis 6ₙ, im Folgenden Kommunikationsprotokolle 6₁, 6₂ bis 6ₙ genannt, geladen werden können. Um die Funktionsfähigkeit des Kommunikationssystems gewährleisten zu können, muss das Kommunikationssystem aber zumindest eine Speicherpartition 7₁, 7₂ bis 7ₙ aufweisen. Es wird dabei immer genau ein Kommunikationsprotokoll 6₁, 6₂ bis 6ₙ in eine Speicherpartition 7₁, 7₂ bis 7ₙ geladen. Dabei muss nicht zwingend das Kommunikationsprotokoll 6₁ in die Speicherpartition 7₁ geladen werden. Vielmehr kann z.B. in die Speicherpartition 7₁ genau eines der bekannten und/oder zukünftig erwarteten Kommunikationsprotokolle 6₁, 6₂ bis 6ₙ geladen werden.

Weiterhin weist das Kommunikationssystem eine Ladeeinheit 4 auf. Die Ladeeinheit 4 ist selbst in einer eigenen Speicherpartition 5 oder in Form einer Kernel-Task (dt. Kernel-Aufgabe) realisiert. Die Speicherpartitionen 7₁, 7₂ bis 7ₙ haben dabei keinen Zugriff auf die Speicherpartition 5 der Ladeeinheit 4.

Weiterhin ist die Prozess- und Datenverarbeitungseinheit 3 mit der zentralen Verarbeitungseinheit 2, mit der Ladeeinheit 4 und mit zumindest einer Speicherpartition 7₁ und optional mit den weiteren Speicherpartitionen 7₂ bis 7ₙ verbunden. Über die Verbindungen 9₁, 9₂ bis 9ₙ sind die Speicherpartitionen 7₁, 7₂ bis 7ₙ mit der Prozess- und Datenverarbeitungseinheit 3 verbunden. Über die Verbindungen 10₁, 10₂ bis 10ₙ sind die einzelnen Speicherpartitionen 7₁, 7₂ bis 7ₙ mit der Ladeeinheit 4 verbunden. Über die Verbindungen 11_{1,2}, 11_{1,n}, bis 11_{2,n} können die einzelnen Speicherpartitionen 7₁, 7₂ bis 7ₙ untereinander miteinander verbunden sein. Über die Verbindung 8 ist die Ladeeinheit 4 mit der Prozess- und Datenverarbeitungseinheit 3 verbunden. Bei den Verbindungen handelt es sich bevorzugt um Zugriffsberechtigungen, die z.B. eine Speicherpartition 7₁, 7₂ bis 7ₙ oder die Ladeeinheit 4, auf z.B. eine andere Speicherpartition 7₁, 7₂ bis 7ₙ haben können.

Die Ladeeinheit 4 ermöglicht dabei, dass jedes bekannte und/oder zukünftig erwartete Kommunikationsprotokoll 6₁, 6₂ bis 6ₙ in der zumindest einen Speicherpartition 7₁ und in den weiteren Speicherpartitionen 7₂ bis 7ₙ während des Betriebs des Kommunikationssystems 1 auswechselbar ist, ohne dass dabei die zumindest eine Speicherpartition 7₁ oder die weiteren Speicherpartitionen 7₂ bis 7ₙ neu erzeugt werden müssen. Das Kommunikationssystem 1 muss hierfür nicht neu gestartet werden.

Die zentrale Datenverarbeitungseinheit 2 des Kommunikationssystems 1 ist außerdem mit einer Steuereinheit 13 verbunden. Die Steuereinheit 13 interagiert mit einem Benutzer 14. Der Benutzer 14 kann an der Steuereinheit 13 z.B. die Verschlüsselung und/oder die Bitrate und/oder die Modulationsart und/oder die Frequenz und/oder die Bandbreite und/oder die Sendeleistung des Kommunikationssystems 1 einstellen. Ergänzende, oben nicht aufgeführte Einstellungen, sind ebenfalls möglich. Dem Benutzer 14 werden die aktuelle Konfiguration und/oder die getätigten Einstellungen an einer in Fig. 1 nicht dargestellten Bildschirmeinheit angezeigt.

Die zentrale Datenverarbeitungseinheit 2 ist ferner mit einer Sende- und Empfangseinrichtung 15 verbunden. Die Sende- und Empfangseinrichtung 15 ist selbst mit zumindest einer Antenne 16 verbunden. In der Sende- und Empfangseinrichtung wird das Basisbandsignal, welches innerhalb der zentralen Datenverarbeitungseinheit 2 generiert wurde, in ein analoges Signal umgesetzt und in das Übertragungsband gemischt. In Empfangsrichtung verhält es sich genau umgekehrt. Das empfangene Signal wird in der Sende- und Empfangseinrichtung 15 in das Basisband herunter gemischt und anschließend digitalisiert und an die zentrale Datenverarbeitungseinheit 2 übergeben.

Die zentrale Datenverarbeitungseinheit 2 ist weiterhin mit einer Ein- und Ausgabeeinheit 17 verbunden. Die Ein- und Ausgabeeinheit 17 weist dabei einen Audio-Eingang 18 und/oder einen Audio-Ausgang 19 und/oder eine LAN-Schnittstelle 20 (engl. local area network; dt. lokales Netzwerk) und/oder eine USB- Schnittstelle 21 (engl. universal serial bus; dt. universeller serieller Bus) auf. Ein weiterer Benutzer, kann an den Audio-Eingang 18 z.B. ein Mikrophon und an den Audio-Ausgang 19 z.B. einen Kopfhörer anschließen. Nachdem ein erster Benutzer 14 das Kommunikationssystem 1 eingestellt hat, kann der weitere Benutzer mit einem entfernten Benutzer in Kontakt treten.

Neben Sprachdaten können über das Kommunikationssystem 1 auch Computersysteme miteinander verbunden werden. Hierzu steht eine LAN-Schnittstelle 20 bereit. Zumindest eine Speichereinheit 12₁, 12₂ ist entweder direkt und/oder über die USB-Schnittstelle 21 und/oder die LAN- Schnittstelle 20 mit der zentralen Datenverarbeitungseinheit 2 verbunden. Bei diesen Speichereinheiten 12₁, 12₂ kann es sich z.B. um Festplatten, USB-Datensticks oder sonstige Speichermedien handeln. Die Kommunikationsprotokolle 6₁, 6₂ bis 6ₙ werden dabei als Images (dt. Abbilder) auf den Speichereinheiten 12₁, 12₂ vorgehalten. Über die USB-Schnittstelle 21 und/oder die LAN-Schnittstelle 20 ist es dem Benutzer 14 möglich, zusätzliche Kommunikationsprotokolle (Wellenformen) in das Kommunikationssystem 1 einzubinden. Die zentrale Datenverarbeitungseinheit 2 lädt diese zusätzlichen Kommunikationsprotokolle 6₁, 6₂ bis 6ₙ, bzw. die Images dieser zusätzlichen Kommunikationsprotokolle 6₁, 6₂ bis 6ₙ aus der mit der USB-Schnittstelle 21 verbunden und/oder aus der mit der LAN-Schnittstelle 20 verbundenen und/oder aus der mit der zentralen Verarbeitungseinheit 2 direkt verbundenen Speichereinheit 12₁, 12₂ und die Ladeeinheit 4 kopiert diese in die entsprechenden Speicherpartitionen 7₁, 7₂ bis 7ₙ.

Die zumindest eine Speicherpartition 7₁, wie auch die weiteren Speicherpartitionen 7₂ bis 7ₙ sind von ihrer Größe derart gewählt, dass jedes der bekannten und/oder zukünftig erwarteten Kommunikationsprotokolle 6₁, 6₂ bis 6ₙ in diese zumindest eine Speicherpartition 7₁ und in die weiteren Speicherpartitionen 7₂ bis 7ₙ ladbar ist. Bekannte Kommunikationsprotokolle sind z.B. TETRA (engl. terrestrial trunked radio; dt. terestrischer Bündelfunk), ATC HF Datalink (engl air traffic control high frequency datalink; dt. Hochfrequenzdatenlink für die Flugsicherung), VHF ATC (25/8.3 kHz) (engl. very high frequency air treffic control; dt. Ultrakurzwelle für die Flugsicherung), VHF AM (engl. very high frequency/amplitude modulation; dt. amplitudenmodulierte Ultrakurzwelle), VHF/FM (engl. very high frequency/frequency modulation; dt. frequenzmodulierte Ultrakurzwelle). Selbstverständlich gibt es noch eine Vielzahl weiterer Kommunikationsprotokolle 6₁, 6₂ bis 6ₙ, die allesamt in die zumindest eine Speicherpartition 7₁, sowie in die weiteren Speicherpartitionen 7₂ bis 7ₙ ladbar sind. Eine Speicherpartition 7₁, 7₂ bis 7ₙ muss dabei so groß sein, dass z.B. das VHF ATC (25/8.3 kHz) Kommunikationsprotokoll gegen z.B. das ATC HF Datalink Kommunikationsprotokoll oder gegen z.B. das TETRA Kommunikationsprotokoll ausgetauscht werden kann. Beim Einsatz von Separations-Kernel-Betriebssystemen ist ein dynamisches Erzeugen der Speicherpartitionen 7₁, 7₂ bis 7ₙ zur Laufzeit aus Sicherheitsgründen nicht möglich. Würde der Speicherplatz bzw. die Größe der Speicherpartition 7₁, 7₂ bis 7ₙ nicht ausreichen, so müsste die Konfiguration geändert werden, bevor das Kommunikationssystem 1 gestartet wird. Ein Neustart des Kommunikationssystems 1 wäre zwingend erforderlich.

Außerdem ist es vorteilhaft, wenn das Kommunikationssystem 1 derart viele weitere Speicherpartitionen 7₁, 7₂ bis 7ₙ aufweist, dass alle die bekannten und/oder zukünftig erwarteten Kommunikationsprotokolle 6₁, 6₂ bis 6ₙ in diese weiteren Speicherpartitionen 7₁, 7₂ bis 7ₙ ladbar sind, um neben z.B. einer Sprachkommunikation gleichzeitig auch z.B. eine Datenkommunikation aufzubauen.

Hierzu werden beim Start des Kommunikationssystems 1 durch die Prozess- und Datenverarbeitungseinheit 3, die bevorzugt als Separations-Kernel ausgebildet ist, die zumindest eine Speicherpartition 7₁ und/oder die weiteren Speicherpartitionen 7₂ bis 7ₙ mit leerem Inhalt erzeugt. Dabei wird dem Umstand Rechnung getragen, dass ein Erzeugen von weiteren Speicherpartitionen 7₂ bis 7ₙ während des Betriebs des Kommunikationssystems 1 nicht möglich ist. Bei Kommunikationssystemen 1 z.B. zur Flugsicherung an Flughäfen, können Ausfallzeiten durch das Neustarten vermieden werden.

Dadurch ist sichergestellt, dass jedes der bekannten und/oder zukünftig erwarteten Kommunikationsprotokolle 6₁, 6₂ bis 6ₙ mit der Ladeeinheit 4 aus zumindest einer Speichereinheit 12₁, 12₂ geladen werden kann und in der zumindest einen Speicherpartition 7₁ und/oder innerhalb der weiteren Speicherpartitionen 7₂ bis 7ₙ gespeichert werden können. Über einen zentralen Server, der sämtliche Kommunikationsprotokolle 6₁, 6₂ bis 6ₙ vorhält und über eine LAN-Verbindung mit dem Kommunikationssystem 1 verbunden ist, und/oder über einen USB-Datenstick, der mit dem Kommunikationssystem 1 verbunden ist, können weitere Kommunikationsprotokolle 6₁, 6₂ bis 6ₙ im Betrieb nachgeladen werden. Damit wird eine hohe Flexibilität der gesamten Anordnung erreicht.

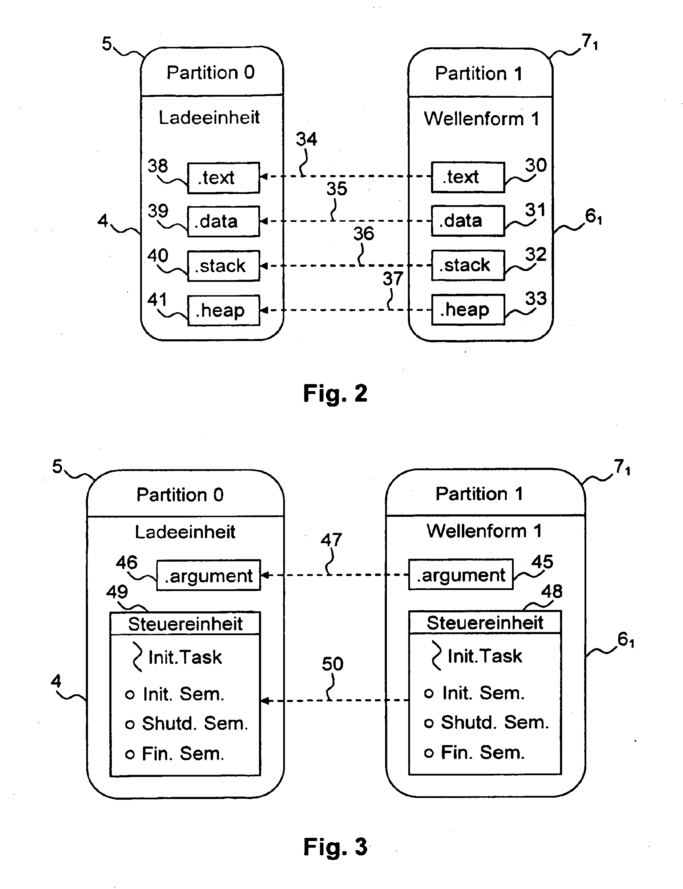

Fig. 2 zeigt eine Detail-Darstellung eines Ausführungsbeispiels des erfindungsgemäßen Kommunikationssystems 1 und erläutert das Zusammenspiel zwischen der Ladeeinheit 4 und einer ersten Speicherpartition 7₁. Die Ladeeinheit 4 ist dabei in einer eigenen Speicherpartition 5 untergebracht und das Kommunikationsprotokoll 6₁ befindet sich in der eigenen Speicherpartition 7₁. Die Ladeeinheit 4 hat dabei Schreib- und Lesezugriff auf Segmente 30, 31, 32, 33 innerhalb der zumindest einen Speicherpartition 7₁ und der, in Fig. 2 nicht dargestellten, weiteren Speicherpartitionen 7₂ bis 7ₙ. Bei den Segmenten 30, 31, 32, 33 handelt es sich um die Segmente ".text" 30, ".data" (dt. Daten) 31, ".stack" (dt. Stapel) 32 und ".heap" (dt. Haufen) 33. Dabei haben die jeweiligen Kommunikationsprotokolle 6₁, 6₂ bis 6ₙ auf ihre jeweiligen Segmente ".text" 30 innerhalb ihrer Speichereinheit 7₁, 7₂ bis 7ₙ nur lesenden Zugriff (engl. read-only), wohingegen sie auf die Segmente ".data" 31, ".stack" 32 und ".heap" 33 sowohl Lesezugriff, als auch Schreibzugriff besitzen. Die Ladeeinheit 4 hat hingegen auf alle Segmente 30, 31, 32, 33 einen Lese- und Schreibzugriff.

Sobald ein neues Kommunikationsprotokoll 6₁, 6₂ bis 6ₙ in eine der Speicherpartitionen 7₁, 7₂ bis 7ₙ geladen werden soll, liest die Ladeeinheit 4 die zu ladenden Kommunikationsprotokolle 6₁, 6₂ bis 6ₙ bzw. deren Images aus einer der Speichereinheiten 12₁, 12₂ aus und kopiert diese in die Segmente ".text" 30 und ".data" 31. In dem Segment ".text" 30 werden dabei die Assemblerinstruktionen der Kommunikationsprotokolle 6₁, 6₂ bis 6ₙ gespeichert, wohingegen die Ladeeinheit 4 in dem Segment ".data" 31 globale Variablen des Kommunikationsprotokolls 6₁, 6₂ bis 6ₙ speichert. Die Segmente ".stack" 32 und ".heap" 33 werden nicht von der Ladeeinheit 4 beschrieben, sondern erst zur Laufzeit der Kommunikationsprotokolle 6₁, 6₂ bis 6ₙ von diesen selbst z.B. bei dynamischen Speicheranforderungen. Die einzelnen Segmente 30, 31, 32, 33 werden in die Speicherpartition 5 der Ladeeinheit 4 abgebildet und können dort über die Zeigervariablen 38, 39, 40, 41 gelesen und beschrieben werden. Dabei werden die einzelnen Segmente 30, 31, 32, 33 getrennt voneinander in die Speicherpartition 5 der Ladeeinheit 4 abgebildet. Dies wird über die gestrichelten Pfeilverbindungen 34, 35, 36, 37 angedeutet.

Die Ladeeinheit 4 kann weiterhin jedes der bekannten und/oder der zukünftig erwarteten Kommunikationsprotokolle 6₁, 6₂ bis 6ₙ wieder aus der zumindest einen Speicherpartition 7₁ und den weiteren Speicherpartitionen 7₂ bis 7ₙ entfernen. Hierzu wird, sobald die Kommunikationsprotokolle 6₁, 6₂ bis 6ₙ beendet sind, die zumindest eine Speicherpartition 7₁ bzw. die weiteren Speicherpartitionen 7₂ bis 7ₙ mit binären Nullen oder binären Einsen durch die Ladeeinheit 4 überschrieben. Dadurch wird sichergestellt, dass keine Reste von alten Kommunikationsprotokollen mehr vorhanden sind, die durch Fehler innerhalb des neu geladenen Kommunikationsprotokolls 6₁, 6₂ bis 6ₙ ausgeführt werden.

Für den Fall, dass weitere Speicherpartitionen 7₂ bis 7ₙ im Kommunikationssystem 1 erzeugt werden sollen, werden diese entsprechend der Speicherpartition 7₁ mit der Ladeeinheit 4 verbunden, wie exemplarisch in Fig. 2 dargestellt. Die Ladeeinheit 4 umfasst in diesem Fall zusätzliche Zeigervariablen, über die es der Ladeeinheit 4 möglich ist, auf die Segmente der weiteren Speicherpartitionen 7₂, bis 7ₙ zuzugreifen.

Fig. 3 zeigt eine weitere Detail-Darstellung eines Ausführungsbeispiels des erfindungsgemäßen Kommunikationssystems 1 und erläutert, wie die Ladeeinheit 4 und eine erste Speicherpartition 7₁ zusammen interagieren. Exemplarisch ist auch hier wieder nur eine Speicherpartition 7₁ dargestellt, die ein Kommunikationsprotokoll 6₁ beinhaltet. Die Ladeeinheit 4 befindet sich ebenfalls wieder in einem eigenen Speicherbereich 5. Für den Fall, dass weitere Speicherpartitionen 7₂ bis 7ₙ im Kommunikationssystem 1 erzeugt werden sollen, werden diese entsprechend der Speicherpartition 7₁ mit der Ladeeinheit 4 verbunden, wie exemplarisch in Fig. 3 dargestellt.

Die Speicherpartition 7₁ verfügt weiterhin über ein Segment ".argument" 45. Dieses Segment 45 wird, ebenfalls getrennt von den anderen Segmenten, in die Speicherpartition 5 der Ladeeinheit 4 abgebildet und kann dort über die Zeigervariable 46 gelesen und beschrieben werden. Eine Forderung der SCA-Architektur ist, dass zum Ausführen der Kommunikationsprotokolle 6₁, 6₂ bis 6ₙ diesen Parameter übergeben werden können müssen. Dies geschieht über das zusätzliche Segment ".argument" 45 und ist über die gestrichelte Pfeilverbindung 47 dargestellt.

Weiterhin verfügt die Speicherpartition 7₁ über eine Ressource "Steuereinheit" 48. Diese Ressource beinhaltet die Anfangsaufgabe (engl. initial Task), sowie die drei Semaphoren "initialisiert" (engl. initialized), "herunterfahren" (engl. shutdown) und "beendet" (engl. finalized). Die Ressource "Steuereinheit" 48 wird ebenfalls auf die Speicherpartition 5 der Ladeeinheit 4 abgebildet und kann dort über die Zeigervariable 49 gelesen und beschrieben werden. Die ist durch die gestrichelte Pfeilverbindung 50 dargestellt. Die Ladeeinheit 4 erhält dadurch auch Schreib- und Lesezugriff auf die drei Semaphoren. Über die Anfangsaufgabe (engl. initial task) kann die Ladeeinheit 4 jedes der bekannten und/oder zukünftig erwarteten Kommunikationsprotokolle 6₁, 6₂ bis 6ₙ innerhalb der zumindest einen Speicherpartition 7₁ bzw. innerhalb der weiteren Speicherpartitionen 7₂ bis 7ₙ ausführen. Hierzu trägt die Ladeeinheit 4 optional ein oder mehrere Argumente bzw. Parameter in das Segment ".argument" 45 der zumindest einen Speicherpartition 7₁ bzw. der weiteren Speicherpartitionen 7₂ bis 7ₙ ein und startet anschließend die Anfangsaufgabe (engl. initial task) der entsprechenden Speicherpartition 7₁, 7₂ bis 7ₙ. Nachdem die Anfangsaufgabe gestartet ist, initialisiert diese die drei Semaphoren ("initialisiert", "herunterfahren" und "beendet"). Ein erfolgreicher Start der Anfangsaufgabe und damit der Kommunikationsprotokolle 6₁, 6₂ bis 6ₙ wird innerhalb der Semaphore "initialisiert" quittiert, die die Ladeeinheit 4 liest.

Die Ladeeinheit 4 kann jedes der bekannten und/oder zukünftig erwarteten Kommunikationsprotokolle 6₁, 6₂ bis 6ₙ innerhalb der zumindest einen Speicherpartition 7₁ und der weiteren Speicherpartitionen 7₂ bis 7ₙ stoppen. Hierzu beschreibt die Ladeeinheit 4 die Semaphore "herunterfahren", wobei dies von einer weiteren Aufgabe (engl. Task) erkannt wird, die beim Start der Anfangsaufgabe neben dieser ebenfalls gestartet wird. Diese beendet das entsprechende Kommunikationsprotokoll 6₁, 6₂ bis 6ₙ innerhalb der entsprechenden Speicherpartition 7₁, 7₂ bis 7ₙ und quittiert das erfolgreiche Beenden des Kommunikationsprotokolls 6₁, 6₂ bis 6ₙ innerhalb der Semaphore "beendet". Dadurch erkennt die Ladeeinheit, wann die Kommunikationsprotokolle 6₁, 6₂ bis 6ₙ gestartet sind und/oder beendet sind.

Sobald die Ladeeinheit 4 erkennt, dass die Semaphore "beendet" beschrieben wurde, löscht die Ladeeinheit 4 das Kommunikationsprotokoll 6₁, 6₂ bis 6ₙ aus der entsprechenden Speicherpartition 7₁, 7₂ bis 7ₙ. Im Anschluss daran kann ein neues Kommunikationsprotokoll 6₁, 6₂ bis 6ₙ von der Ladeeinheit 4 in die frei gewordene Speicherpartition 7₁, 7₂ bis 7ₙ geladen werden. Bevorzugt wird der nicht durch das neu geladene Kommunikationsprotokoll 6₁, 6₂ bis 6ₙ belegte Speicher innerhalb der Speicherpartition 7₁, 7₂ bis 7ₙ durch die Ladeeinheit 4 mit binären Nullen oder binären Einsen überschreiben, bevor die Anfangsaufgabe (engl. initial task) des neuen Kommunikationsprotokolls 6₁, 6₂ bis 6ₙ durch die Ladeeinheit 4 gestartet wird. Dadurch ist sichergestellt, dass keine Reste von alten Kommunikationsprotokollen 6₁, 6₂ bis 6ₙ durch einen fehlerhaften Verweis ausgeführt werden können.

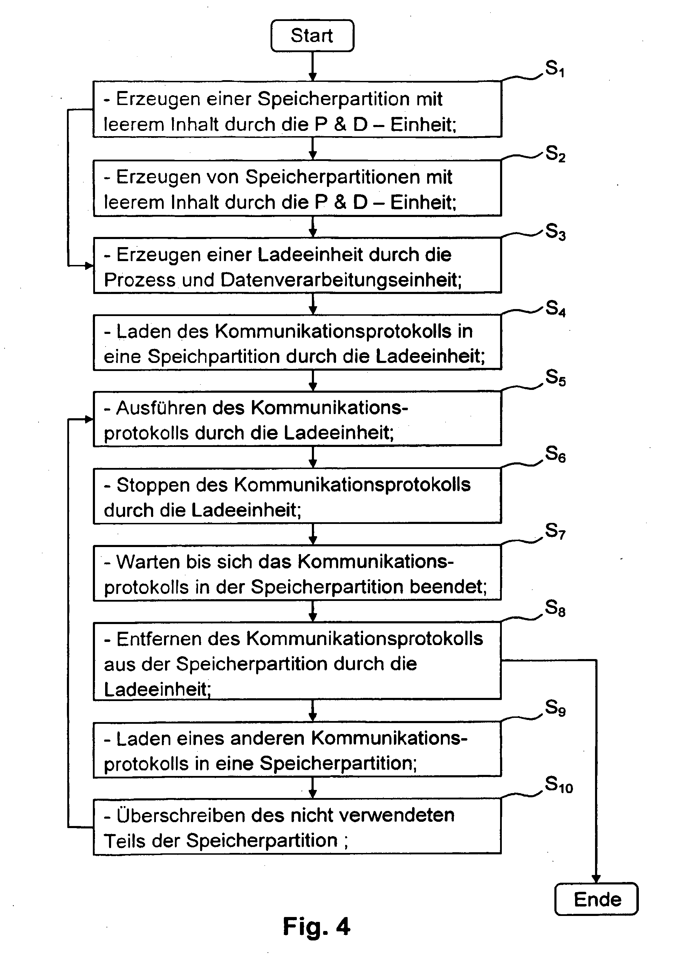

Fig. 4 zeigt ein beispielhaftes Ablaufdiagramm, welches das erfindungsgemäße Verfahren für das Kommunikationssystem 1 beschreibt, wobei dieses eine zentrale Verarbeitungseinheit 2, eine Prozess- und Datenverarbeitungseinheit 3, eine Ladeeinheit 4 und zumindest eine Speicherpartition 7₁ aufweist. Bei der Prozess- und Datenverarbeitungseinheit 3 handelt es sich dabei um ein Separations-Kernel.

In einem ersten Verfahrensschritt S₁ wird durch die Prozess- und Datenverarbeitungseinheit 3 zumindest eine Speicherpartition 7₁ mit leerem Inhalt erzeugt, die größer ist, als jedes bekannte und/oder zukünftig erwartete Kommunikationsprotokoll 6₁, 6₂ bis 6ₙ. Die zumindest eine Speicherpartition 7₁ wird dabei beim Start des Kommunikationssystems 1 erzeugt, weil z.B. bei einem Einsatz eines Separations-Kernel ein Erzeugen von Speicherpartitionen 7₁, 7₂ bis 7ₙ während des Betriebs nicht möglich ist.

In einem optionalen zweiten Verfahrensschritt S₂ können beliebig viele weitere Speicherpartitionen 7₂ bis 7ₙ mit leerem Inhalt durch die Prozess- und Datenverarbeitungseinheit 3 erzeugt werden, so dass alle der bekannten und/oder zukünftig erwarteten Kommunikationsprotokolle 6₁, 6₂ bis 6ₙ in diese weiteren Speicherpartitionen 7₂ bis 7ₙ geladen werden können. Diese weiteren Speicherpartitionen 7₂ bis 7ₙ werden ebenfalls direkt nach beim Start des Kommunikationssystems 1 angelegt.

Nach dem ersten Verfahrensschritt S₁ oder optional nach dem zweiten Verfahrensschritt S₂ wird ein dritter Verfahrensschritt S₃ ausgeführt. Innerhalb des dritten Verfahrensschritts S₃ wird eine weitere Speicherpartition 5 erzeugt, in die durch die Prozess- und Datenverarbeitungseinheit 3 die Ladeeinheit 4 kopiert und ausgeführt wird. Weiterhin werden durch die Prozess- und Datenverarbeitungseinheit 5 die notwendigen Zugriffsrechte der Ladeeinheit 4 auf die Speicherpartitionen 7₁, 7₂ bis 7ₙ gesetzt. Optional kann diese Ladeeinheit 4 auch als Kernel-Aufgabe (kernel-task) ausgeführt werden, so dass dieser Verfahrensschritt entfällt.

In einem vierten Verfahrensschritt S₄ wird das Kommunikationsprotokoll 6₁, 6₂ bis 6ₙ aus einer mit der zentralen Verarbeitungseinheit 2 verbundenen Speichereinheit 12₁, 12₂ in die zumindest eine Speicherpartition 7₁ geladen, während dabei das Kommunikationssystem 1 in Betrieb ist. Optional können in diesem vierten Verfahrensschritt S₄ auch weitere Kommunikationsprotokolle 6₁, 6₂ bis 6ₙ in die weiteren Speicherpartitionen 7₂ bis 7ₙ geladen werden.

In einem fünften Verfahrensschritt S₅ wird das Kommunikationsprotokoll 6₁, 6₂ bis 6ₙ in der zumindest einen Speicherpartition 7₁ durch die Ladeeinheit 4 ausgeführt. Optional können auch die weiteren Kommunikationsprotokolle 6₁, 6₂ bis 6ₙ in den weiteren Speicherpartitionen 7₂ bis 7ₙ durch die Ladeeinheit ausgeführt werden. Hierzu schreibt die Ladeeinheit 4 die entsprechenden Argumente, wie in dem Ausführungsbeispiel zu Fig. 3 beschrieben, in die entsprechenden Speicherpartitionen 7₁, 7₂ bis 7ₙund startet anschließend die Anfangsaufgabe (engl. initial task) innerhalb der entsprechenden Speicherpartitionen 7₁, 7₂ bis 7ₙ. Die Anfangsaufgabe startet eine weitere Aufgabe, initialisiert die drei Semaphoren und beschreibt, nachdem das Kommunikationsprotokoll 6₁, 6₂ bis 6ₙ gestartet wurde, die Semaphore "initialisiert".

Sobald eines der Kommunikationsprotokolle 6₁, 6₂ bis 6ₙ beendet werden soll, wird der Verfahrensschritt S₆ ausgeführt. Das zu beendende Kommunikationsprotokoll 6₁, 6₂ bis 6ₙ wird dabei durch die Ladeeinheit 4 innerhalb der zumindest einen Speicherpartition 7₂ bis 7ₙ oder innerhalb einer der weiteren Speicherpartitionen 7₂ bis 7ₙ gestoppt. Hierzu beschreibt die Ladeeinheit die Semaphore "herunterfahren". Die weitere Aufgabe (engl. task) erkennt dies und beendet das entsprechende Kommunikationsprotokoll 6₁, 6₂ bis 6ₙ.

In einem siebten Verfahrensschritt S₇ wartet die Ladeeinheit 4 solange, bis das entsprechende Kommunikationsprotokoll 6₁, 6₂ bis 6ₙ innerhalb der zumindest einen Speicherpartition 7₁ oder innerhalb einer der weiteren Speicherpartitionen 7₂ bis 7ₙ beendet ist. Sobald das Kommunikationsprotokoll 6₁, 6₂ bis 6ₙ beendet ist, beschreibt die weitere Aufgabe (engl. task) die Semaphore "beendet", was die Ladeeinheit 4 wiederum erkennt.

In einem achten Verfahrensschritt S₈ entfernt die Ladeeinheit 4 das Kommunikationsprotokoll 6₁, 6₂ bis 6ₙ aus der zumindest einen Speicherpartition 7₁ oder aus der zumindest einen weiteren Speicherpartition 7₂ bis 7ₙ. Soll kein weiteres Kommunikationsprotokoll 6₁, 6₂ bis 6ₙ in die Speicherpartition 7₁, 7₂ bis 7ₙ geladen werden, ist das Verfahren beendet.

Soll hingegen das Kommunikationsprotokoll 6₁, 6₂ bis 6ₙ durch ein anderes getauscht werden, dann wird in einem neunten Verfahrensschritt S₉ ein anderes der bekannten Kommunikationsprotokolle 6₁, 6₂ bis 6ₙ in die zumindest eine Speicherpartition 7₁ oder in eine weitere der Speicherpartition 7₂ bis 7ₙ durch die Ladeeinheit 4 geladen, während das Kommunikationssystem 1 in Betrieb ist.

In einem zehnten Verfahrensschritt S₁₀ wird der nicht von dem neuen Kommunikationsprotokoll 6₁, 6₂ bis 6ₙ belegte Speicher innerhalb der entsprechenden Speicherpartition 7₁, 7₂ bis 7ₙ durch die Ladeeinheit 4 mit binären Einsen oder binären Nullen überschrieben. Dadurch wird sichergestellt, dass keinerlei Reste des alten Kommunikationsprotokolls 6₁, 6₂ bis 6ₙ mehr ausgeführt werden können. Nach dem zehnten Verfahrensschritt S₁₀ wird der fünfte Verfahrensschritt S₅ für das neue geladene Kommunikationsprotokoll erneut ausgeführt. Der Verfahrensschritt S₁₀ kann optional auch direkt an den Verfahrensschritt S₈ angeschlossen werden.

Sämtliche Verfahrensschritte, mit Ausnahme der Verfahrensschritte S₁, S₂ und S₃, werden ausgeführt, solange das Kommunikationssystem 1 in Betrieb ist. Die Verfahrensschritte S₁, S₂, S₃ werden einzig einmalig beim Start und nicht im Betrieb des Kommunikationssystems 1 ausgeführt.

Die Erfindung ist nicht nur auf das beschriebene Ausführungsbeispiel beschränkt. Die Erfindung ist z.B. auch für drahtgebundene Kommunikationssysteme geeignet. Außerdem ist möglich, dass die durch die Ladeeinheit 4 geladenen Kommunikationsprotokolle 6₁, 6₂ bis 6ₙ durch z.B. Streuwertfunktionen (engl. Hashfunktionen) erst eindeutig verifiziert werden, bevor sie durch die Ladeeinheit 4 gestartet werden. Dadurch wird sichergestellt, dass kompromittierte und/oder fehlerhafte Kommunikationsprotokolle 6₁, 6₂ bis 6ₙ nicht ausgeführt werden. Im Rahmen der Erfindung sind alle beschriebenen und/oder gezeichneten Merkmale beliebig miteinander kombinierbar.

## Patentansprüche

1. Kommunikationssystem (1) zur mobilen Kommunikation mit einer zentralen Verarbeitungseinheit (2), einer Prozess-und Datenverarbeitungseinheit (3), einer Ladeeinheit (4) und zumindest einer Speicherpartition (7₁),
wobei die Prozess- und Datenverarbeitungseinheit (3) mit der zentralen Verarbeitungseinheit (2), mit der Ladeeinheit (4) und mit der zumindest einen Speicherpartition (7₁) verbunden ist und wobei die Ladeeinheit (4) mit der zumindest einen Speicherpartition (7₁) verbunden ist,
**dadurch gekennzeichnet,**
**dass** ein Kommunikationsprotokoll (6₁, 6₂ bis 6ₙ) in der zumindest einen Speicherpartition (7₁) während des Betriebs des Kommunikationssystems (1) durch die Ladeeinheit (4) auswechselbar ist, und
**dass** das Kommunikationssystem (1) derart viele weitere Speicherpartitionen (7₂ bis 7ₙ) aufweist, dass alle verwendbaren Kommunikationsprotokolle (6₁, 6₂ bis 6ₙ) in diese weiteren Speicherpartition (7₂ bis 7ₙ) ladbar sind, und dass die Ladeeinheit (4) jedes verwendbare Kommunikationsprotokoll (6₁, 6₂ bis 6ₙ). innerhalb der zumindest einen Speicherpartition (7₁) und/oder den weiteren Speicherpartition (7₂ bis 7ₙ) ausführen kann und dass die zumindest eine Speicherpartition (7₁) und jede weitere Speicherpartition (7₂ bis 7ₙ) jeweils größer als jedes verwendbare Kommunikationsprotokoll (6₁, 6₂ bis 6ₙ) ist.

2. Kommunikationssystem nach Anspruch 1,
**dadurch gekennzeichnet,**
**dass** es sich bei der Prozess- und Datenverarbeitungseinheit (3) um ein Separations-Kernel handelt.

3. Kommunikationssystem nach Anspruch 1 oder 2,
**dadurch gekennzeichnet,**
**dass** beim Start des Kommunikationssystems (1) durch die Prozess- und Datenverarbeitungseinheit (3) die zumindest eine Speicherpartition (7₁) und/oder die weiteren Speicherpartition (7₂ bis 7ₙ) mit leerem Inhalt erzeugt werden.

4. Kommunikationssystem nach einem der Ansprüche 1 bis 3, **dadurch gekennzeichnet,**
**dass** die zumindest eine Speichereinheit (12₁, 12₂) direkt mit der zentralen Datenverarbeitungseinheit (2) verbunden ist und/oder über eine USB-Schnittstelle (21) und/oder eine LAN- Schnittstelle (20) mit dieser verbindbar ist.

5. Kommunikationssystem nach einem der vorherigen Ansprüche,
**dadurch gekennzeichnet,**
**dass** die Ladeeinheit (4) selbst in einer eigenen Speicherpartition (5) oder in Form einer Kernel-Aufgabe (Kernel-Task) realisiert ist.

6. Kommunikationssystem nach einem der Ansprüche 1 bis 5,
**dadurch gekennzeichnet,**
**dass** die Ladeeinheit (4) jedes verwendbare Kommunikationsprotokoll (6₁, 6₂ bis 6ₙ) innerhalb der zumindest einen Speicherpartition (7₁) und/oder den weiteren Speicherpartitionen (7₂ bis 7ₙ) stoppen kann.

7. Kommunikationssystem nach einem der Ansprüche 1 bis 6,
**dadurch gekennzeichnet,**
**dass** die Ladeeinheit (4) erkennt, wann die Kommunikationsprotokolle (6₁, 6₂ bis 6ₙ) gestartet sind und/oder beendet sind.

8. Kommunikationssystem nach einem der Ansprüche 1 bis 7,
**dadurch gekennzeichnet,**
**dass** jedes verwendbare Kommunikationsprotokolle (6₁, 6₂ bis 6ₙ) aus der zumindest einen Speicherpartition (7₁) und/oder den weiteren Speicherpartitionen (7₂ bis 7ₙ) durch die Ladeeinheit (4) entfernbar ist.

9. Verfahren für ein Kommunikationssystem (1) zur mobilen Kommunikation aufweisend eine zentrale
Verarbeitungseinheit (2), eine Prozess- und Datenverarbeitungseinheit (3), eine Ladeeinheit (4) und zumindest eine Speicherpartition (7₁), deren Kommunikationsprotokolle (6₁, 6₂ bis 6ₙ) während des Betriebs des Kommunikationssystems (1) auswechselbar sind, mit den nachfolgenden Verfahrensschritten:
- Erzeugen (S₁) der zumindest einen Speicherpartition (7₁) mit leerem Inhalt;
- Laden (S₂) des Kommunikationsprotokolls (6₁, 6₂ bis 6ₙ) aus zumindest einer mit der zentralen Verarbeitungseinheit (2) verbundenen Speichereinheit (12₁, 12₂) in die zumindest eine Speicherpartition (7₁) durch die Ladeeinheit (4) ; und
- Ausführen (S₅) des Kommunikationsprotokolls (6₁, 6₂ bis 6ₙ) durch die Ladeeinheit (4) innerhalb der zumindest einen Speicherpartition (7₁),
**dadurch gekennzeichnet,**
**dass** das Laden (S₂) des Kommunikationsprotokolls (6₁, 6₂ bis 6ₙ) in die zumindest eine Speicherpartition (7₁) während des Betriebs des Kommunikationssystems (1) erfolgt, und dass die zumindest eine Speicherpartition (7₁) größer als jedes bekannte und/oder zukünftig zu erwartende Kommunikationsprotokoll (6₁, 6₂ bis 6ₙ) ist, und
das Verfahren zusätzlich die folgenden Verfahrensschritte aufweist:
- Erzeugen (S₂) von weiteren Speicherpartition (7₂ bis 7ₙ), so dass alle verwendbaren Kommunikationsprotokolle (6₁, 6₂ bis 6ₙ) in diese weiteren Speicherpartitionen (7₂ bis 7ₙ) geladen werden können und
- Laden jedes verwendbaren Kommunikationsprotokolls (6₁, 6₂ bis 6ₙ) innerhalb der zumindest einen Speicherpartition (7₁) und/oder den weiteren Speicherpartition (7₂ bis 7ₙ) durch die Ladeeinheit (4).

10. Verfahren nach Anspruch 9,
**dadurch gekennzeichnet,**
**dass** das Verfahren zusätzlich die folgenden Verfahrensschritte aufweist:
- Stoppen (S₆) des Kommunikationsprotokolls (6₁, 6₂ bis 6ₙ) durch die Ladeeinheit (4) innerhalb der zumindest einen Speicherpartition (7₁);
- Warten (S₇) bis sich das Kommunikationsprotokoll (6₁, 6₂ bis 6ₙ) innerhalb der zumindest einen Speicherpartition (7₁) beendet hat; und
- Entfernen (S₈) des Kommunikationsprotokolls (6₁, 6₂ bis 6ₙ) aus der zumindest einen Speicherpartition (7₁) durch die Ladeeinheit (4).

11. Verfahren nach Anspruch 9 oder 10,
**dadurch gekennzeichnet,**
**dass** das Verfahren zusätzlich den folgenden Verfahrensschritt aufweist:
- Laden (S₉) eines anderen der verwendbare Kommunikationsprotokolle (6₁, 6₂ bis 6ₙ) in die zumindest eine Speicherpartition (7₁) durch die Ladeeinheit (4), während das Kommunikationssystem (1) in Betrieb ist.

12. Verfahren nach Anspruch 11,
**dadurch gekennzeichnet,**
**dass** das Verfahren zusätzlich den folgenden Verfahrensschritt aufweist:
- Überschreiben (S₁₀) eines von dem anderen Kommunikationsprotokoll (6₁, 6₂ bis 6ₙ) nicht belegten Speichers der zumindest einen Speicherpartition (7₁) mit binären Nullen oder mit binären Einsen durch die Ladeeinheit (4).

13. Verfahren nach einem der Ansprüche 9 bis 12,
**dadurch gekennzeichnet,**
**dass** das Verfahren zusätzlich den folgenden Verfahrensschritt aufweist:
- Erzeugen (S₃) der Ladeeinheit (4) durch die Prozess-und Datenverarbeitungseinheit (3) in einer eigenen Speicherpartition (5) oder als Kernel-Aufgabe (Kernel-Task).

14. Verfahren nach einem der Ansprüche 9 bis 13,
**dadurch gekennzeichnet,**
**dass** es sich bei der Prozess- und Datenverarbeitungseinheit (3) um ein Separations-Kernel handelt.

## Claims

1. Communications system (1) for mobile communications comprising a central processing unit (2), a process and data processing unit (3), a loader (4) and at least one memory partition (7₁), wherein the process and data processing unit (3) is connected to the central processing unit (2), to the loader (4) and to the at least one memory partition (7₁), and the loader (4) is connected to the at least one memory partition (7₁),
**characterized in that**
the loader (4) can replace a communications protocol (6₁, 6₂ to 6ₙ) in the at least one memory partition (7₁) while the communications system (1) is in operation, and **in that** the communications system (1) comprises as many further memory partitions (7₂ to 7ₙ) as to allow all the usable communications protocols (6₁, 6₂ to 6ₙ) to be loaded into these further memory partitions (7₂ to 7ₙ),
and **in that** the loader (4) can execute each usable communications protocol (6₁, 6₂ to 6ₙ) in the at least one memory partition (7₁) and/or in the further memory partitions (7₂ to 7ₙ),
and **in that** the at least one memory partition (7₁) and each further memory partition (7₂ to 7ₙ) are each larger that each usable communications protocol (6₁, 6₂ to 6ₙ).

2. Communications system according to claim 1,
**characterized in that**
the process and data processing unit (3) is a separation kernel.

3. Communications system according to claim 1 or 2,
**characterized in that**
when the communications system (1) is started, the process and data processing unit (3) creates the at least one memory partition (7₁) and/or the further memory partition (7₂ to 7ₙ) as empty memory partitions.

4. Communications system according to any of claims 1 to 3,
**characterized in that**
the at least one memory unit (12₁, 12₂) is connected directly to the central data processing unit (2) and/or can be connected thereto via a USB interface (21) and/or a LAN interface (20).

5. Communications system according to any of the preceding claims,
**characterized in that**
the loader (4) is itself implemented in a dedicated memory partition (5) or in the form of a kernel task.

6. Communications system according to any of claims 1 to 5,
**characterized in that**
the loader (4) can stop each useable communications protocol (6₁, 6₂ to 6ₙ) in the at least one memory partition (7₁) and/or in the further memory partitions (72 to 7n).

7. Communications system according to any of claims 1 to 6,
**characterized in that**
the loader (4) detects when the communications protocols (6₁, 6₂ to 6ₙ) are launched and/or terminated.

8. Communications system according to any of claims 1 to 7,
**characterized in that**
the loader (4) can remove each useable communications protocol (6₁, 6₂ to 6ₙ) from the at least one memory partition (7₁) and/or from the further memory partitions (7₂ to 7ₙ).

9. Method for a communications system (1) for mobile communications comprising a central processing unit (2), a process and data processing unit (3), a loader (4) and at least one memory partition (7₁), the communications protocols (6₁, 6₂ to 6ₙ) of which memory partition can be replaced during operation of the communications system (1),
comprising the following method steps:
- creating (S₁) the at least one memory partition (7₁), which memory partition is empty;
- the loader (4) loading (S₂) the communications protocol (6₁, 6₂ to 6ₙ) from at least one memory unit (12₁, 12₂) connected to the central processing unit (2) into the at least one memory partition (7₁); and
- the loader (4) executing (S₅) the communications protocol (6₁, 6₂ to 6ₙ) in the at least one memory partition (7₁),
**characterized in that**
- the loading (S₂) of the communications protocol (6₁, 6₂ to 6ₙ) into the at least one memory partition (7₁) takes place while the communications system (1) is in operation, and **in that** the at least one memory partition (7₁) is larger than each known and/or prospective communications protocol (6₁, 6₂ to 6ₙ), and the method additionally comprises the following method steps:
- creating (S₂) further memory partitions (7₂ to 7ₙ) all the useable communications protocols (6₁, 6₂ to 6ₙ) can be loaded into these further memory partitions (7₂ to 7ₙ), and
- the loader (4) loading each useable communications protocol (6₁, 6₂ to 6ₙ) in the at least one memory partition (7₁) and/or the further memory partitions (7₂ to 7ₙ).

10. Method according to claim 9,
**characterized in that**
the method additionally comprises the following method steps:
- the loader (4) stopping (S₆) the communications protocol (6₁, 6₂ to 6ₙ) in the at least one memory partition (7₁) ;
- waiting (S₇) until the communications protocol (6₁, 6₂ to 6ₙ) in the at least one memory partition (7₁) has terminated; and
- the loader (4) removing (S₈) the communications protocol (6₁, 6₂ to 6ₙ) from the at least one memory partition (7₁).

11. Method according to claim 9 or 10,
**characterized in that**
the method additionally comprises the following method step:
- the loader (4) loading (S₉) another of the useable communications protocols (6₁, 6₂ to 6ₙ) into the at least one memory partition (7₁) while the communications system (1) is in operation.

12. Method according to claim 11,
**characterized in that**
the method additionally comprises the following method step:
- the loader (4) overwriting with binary zeros or binary ones the memory that is not occupied by the other communications protocol (6₁, 6₂ to 6ₙ) in the at least one memory partition (7₁).

13. Method according to any of claims 9 to 12,
**characterized in that**
the method additionally comprises the following method step:
- the process and data processing unit (3) creating (S₃) the loader (4) in a dedicated memory partition (5) or as a kernel task.

14. Method according to any of claims 9 to 13,
**characterized in that**
the process and data processing unit (3) is a separation kernel.

## Revendications

1. Système de communication (1) en vue d'une communication mobile comportant une unité centrale (2), une unité de traitement de processus et de données (3), une unité de charge (4) et au moins une partition de mémoire (7₁),
dans lequel l'unité de traitement de processus et de données (3) est reliée à l'unité centrale (2), à l'unité de charge (4) et à la au moins une partition de mémoire (7₁) et dans lequel l'unité de charge (4) est reliée à la au moins une partition de mémoire (7₁),
**caractérisé en ce que**
un protocole de communication (6₁, 6₂ à 6ₙ) peut être changé par l'unité de charge (4) dans la au moins une partition de mémoire (7₁) pendant le fonctionnement du système de communication (1), et
**en ce que** le système de communication (1) présente de nombreuses autres partitions de mémoire (7₂ à 7ₙ) de sorte que tous les protocoles de communication utilisables (6₁, 6₂ à 6ₙ) peuvent être chargés dans cette autre partition de mémoire (7₂ à 7ₙ),
et **en ce que** l'unité de charge (4) peut exécuter chaque protocole de communication utilisable (6₁, 6₂ à 6ₙ) à l'intérieur de la au moins une partition de mémoire (7₁) et/ou de l'autre partition de mémoire (7₂ à 7ₙ) et
**en ce que** la au moins une partition de mémoire (7₁) et chaque autre partition de mémoire (7₂ à 7ₙ) est respectivement plus grande que chaque protocole de communication utilisable (6₁, 6₂ à 6ₙ).

2. Système de communication selon la revendication 1, **caractérisé en ce que**
dans le cas de l'unité de traitement de processus et de données (3), il agit d'un noyau de séparation.

3. Système de communication selon la revendication 1 ou 2, **caractérisé en ce que**
la au moins une partition de mémoire (7₁) et/ou l'autre partition de mémoire (7₂ à 7ₙ) sont générées avec un contenu vide au démarrage du système de communication (1) par l'unité de traitement de processus et de données (3).

4. Système de communication selon l'une des revendications 1 à 3, **caractérisé en ce que**
la au moins une unité de mémoire (12₁, 12₂) est reliée directement à l'unité de traitement de données centrale (2) et/ou peut être reliée à celle-ci par l'intermédiaire d'une interface USB (21) et/ou d'une interface LAN (20).

5. Système de communication selon l'une des revendications précédentes, **caractérisé en ce que**
l'unité de charge (4) est réalisée elle-même dans une partition de mémoire propre (5) ou sous la forme d'une tâche noyau (Kernel-Task).

6. Système de communication selon l'une des revendications 1 à 5, **caractérisé en ce que**
l'unité de charge (4) peut stopper chaque protocole de communication utilisable (6₁, 6₂ à 6ₙ) à l'intérieur de la au moins une partition de mémoire (7₁) et/ou des autres partitions de mémoire (7₂ à 7ₙ).

7. Système de communication selon l'une des revendications 1 à 6, **caractérisé en ce que**
l'unité de charge (4) reconnaît, lorsque les protocoles de communication (6₁, 6₂ à 6ₙ) sont commencés et/ou sont terminés.

8. Système de communication selon l'une des revendications 1 à 7, **caractérisé en ce que**
chaque protocole de communication utilisable (6₁, 6₂ à 6ₙ) peut être éloigné par l'unité de charge (4) de la au moins une partition de mémoire (7₁) et/ou des autres partitions de mémoire (7₂ à 7ₙ).

9. Procédé pour un système de communication (1) en vue d'une communication mobile comportant une unité centrale (2), une unité de traitement de processus et de données (3), une unité de charge (4) et au moins une partition de mémoire (7₁), dont les protocoles de communication (6₁, 6₂ à 6ₙ) peuvent être changés pendant le fonctionnement du système de communication (1), comportant les étapes de procédé suivantes :
- la génération (S₁) de la au moins une partition de mémoire (7₁) avec un contenu vide ;
- la charge (S₂) du protocole de communication (6₁, 6₂ à 6ₙ) à partir de la au moins une unité de mémoire (12₁, 12₂) reliée à l'unité centrale (2) dans la au moins une partition de mémoire (7₁) par l'unité de charge (4) ; et
- la mise en oeuvre (S₅) du protocole de communication (6₁, 6₂ à 6ₙ) par l'unité de charge (4) à l'intérieur de la au moins une partition de mémoire (7₁),
**caractérisé en ce que**
la charge (S₂) du protocole de communication (6₁, 6₂ à 6ₙ) dans la au moins une partition de mémoire (7₁) est effectuée pendant le fonctionnement du système de communication (1), et **en ce que** la au moins une partition de mémoire (7₁) est supérieure à chaque protocole de communication connu et/ou futur (6₁, 6₂ à 6ₙ), et
le procédé comporte en plus les étapes de procédé suivantes :
- la génération (S₂) d'autre partition de mémoire (7₂ à 7ₙ), de sorte que tous les protocoles de communication utilisables (6₁, 6₂ à 6ₙ) peuvent être chargés dans ces autres partitions de mémoire (7₂ à 7ₙ) et
- la charge de chaque protocole de communication utilisable (6₁, 6₂ à 6ₙ) à l'intérieur de la au moins une partition de mémoire (7₁) et/ou de l'autre partition de mémoire (7₂ à 7ₙ) par l'unité de charge (4).

10. Procédé selon la revendication 9, **caractérisé en ce que**
le procédé comporte en plus les étapes de procédé suivantes :
- l'arrêt (S₆) du protocole de communication (6₁, 6₂ à 6ₙ) par l'unité de charge (4) à l'intérieur de la au moins une partition de mémoire (7₁) ;
- l'attente (S₇) jusqu'à ce que le protocole de communication (6₁, 6₂ à 6ₙ) soit terminé à l'intérieur de la au moins une partition de mémoire (7₁) ; et
- la suppression (S₈) du protocole de communication (6₁, 6₂ à 6ₙ) de la au moins une partition de mémoire (7₁) par l'unité de charge (4).

11. Procédé selon la revendication 9 ou 10, **caractérisé en ce que**
le procédé comporte en outre l'étape de procédé suivante :
- la charge (S₉) d'un autre protocole de communication parmi les protocoles de communication utilisables (6₁, 6₂ à 6ₙ) dans la au moins une partition de mémoire (7₁) par l'unité de charge (4), pendant que le système de communication (1) est en fonctionnement.

12. Procédé selon la revendication 11, **caractérisé en ce que**
le procédé comporte de plus l'étape de procédé suivante :
- l'écrasement (S₁₀) d'une mémoire non occupée par l'autre protocole de communication (6₁, 6₂ à 6ₙ) de la au moins une partition de mémoire (7₁) avec des zéros binaires ou des uns binaires par l'unité de charge (4).

13. Procédé selon l'une des revendications 9 à 12, **caractérisé en ce que**
le procédé comporte en outre l'étape de procédé suivante :
- la génération (S₃) de l'unité de charge (4) par l'unité de traitement de processus et de données (3) dans une partition de mémoire propre (5) ou en tant que tâche noyau (Kernel-Task).

14. Procédé selon l'une des revendications 9 à 13, **caractérisé en ce que**
concernant l'unité de traitement de processus et de données (3), il s'agit d'un noyau de séparation.
